# EUROPÄISCHE PATENTSCHRIFT

(11) **EP 2 641 056 B1**
(45) Veröffentlichungstag und Bekanntmachung des Hinweises auf die Patenterteilung: **21.03.2018**
(21) Anmeldenummer: 11785019.8
(22) Anmeldetag: 18.11.2011
(51) Int. Cl.: G01C 21/34, G08G 1/0968

(54) **NAVIGATIONSSYSTEM**
NAVIGATION SYSTEM
SYSTÈME DE NAVIGATION

(30) Priorität: 20.11.2010 DE 102010052114
(43) Veröffentlichungstag der Anmeldung: 25.09.2013
(73) Patentinhaber: Bayerische Motoren Werke Aktiengesellschaft, 80809 München (DE)
(72) Erfinder: TAVA, Marcello, 81369 München (DE)
(74) Vertreter: Mayer-Martin, Christian
(86) Internationale Anmeldenummer: PCT/EP2011/070474
(87) Internationale Veröffentlichungsnummer: WO 2012/066130

(56) Entgegenhaltungen:
- EP-A2- 1 381 009
- EP-A2- 1 580 531
- DE-A1- 10 332 068
- US-A1- 2001 029 425

## Beschreibung

Die Erfindung betrifft ein Navigationssystem, insbesondere für ein Kraftfahrzeug.

Mit Navigationssystemen ist es möglich, basierend auf einer digitalen Straßenkarte nach verschiedenen Kriterien optimierte Routen zwischen einem Startpunkt und einem Zielpunkt zu berechnen.

Eine solche Route wird aus Straßenabschnitten zusammengestellt. Dabei ist es vorgeschlagen, Straßenabschnitten der digitalen Straßenkarte Informationen über zeitabhängige Verkehrsbeschränkungen zuzuordnen, die den realen Verkehrsbeschränkungen dieser Straßenabschnitte entsprechen.

Beispielsweise kann eine zeitabhängige Verkehrsbeschränkung darin bestehen, dass ein Straßenabschnitt zu bestimmten Zeiten gesperrt ist, dass ein Straßenabschnitt zu bestimmten Zeiten nur in eine Richtung befahrbar ist, dass ein Straßenabschnitt zu bestimmten Zeiten nur durch bestimmte Fahrzeugtypen befahrbar ist, oder dass ein Straßenabschnitt zu bestimmten Zeiten nur mit einer vorgegebenen Höchstgeschwindigkeit befahrbar ist, usw.

Ein Ziel bei der Entwicklung moderner Navigationssysteme besteht darin, solche zeitabhängigen Verkehrsbeschränkungen bei der Berechnung von Routen zu berücksichtigen.

Bei der Berechnung von langen Routen wurde dabei als Schwierigkeit erkannt, zu prognostizieren, ob für weit entfernte Straßenabschnitte eine zeitabhängige Verkehrsbeschränkung Beachtung finden muss oder nicht. Ist beispielsweise bei einer Berechnung einer schnellsten Route von München nach Hamburg um 15 Uhr (Startzeit) eine Geschwindigkeitsbeschränkung für einen Straßenabschnitt in Hamburg, die zwischen 22 Uhr und 6 Uhr gilt, zu beachten oder nicht?

Aus der DE10332068A1 sind ein Navigationssystem und ein Routensuchverfahren bekannt, bei denen eine Routensuche auf einer Berücksichtigung einer gegenwärtigen Zeit und zeitlichen Beschränkungsperioden von Straßen mit zeitlichen Beschränkungen beruht.

Der Erfindung liegt nun die Aufgabe zugrunde, eine gegenüber dem Stand der Technik verbesserte technische Lehre anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Ein erfindungsgemäßes Navigationssystem umfasst eine Speichereinrichtung (z.B. Festplatte, DVD, entfernter zentraler Kartenserver), in der, beispielsweise als Bestandteil einer elektronischen Straßenkarte, Informationen über Straßenabschnitte und Informationen über zeitabhängige Verkehrsbeschränkungen derart abgespeichert sind, dass Straßenabschnitten zumindest teilweise Informationen über zeitabhängige Verkehrsbeschränkungen zugeordnet sind.

Eine Routen-Berechnungseinrichtung, wie beispielsweise ein programmgesteuerter Prozessor, ist derart eingerichtet, dass bei der Berechnung einer, insbesondere optimalen (schnellsten, kürzesten, ...), Route auf die Speichereinrichtung zugegriffen wird, um basierend auf den Informationen über Straßenabschnitte und den Informationen über zeitabhängige Verkehrsbeschränkungen eine Route zu berechnen.

Bei der Berechnung der Route werden Informationen über zeitabhängige Verkehrsbeschränkungen für einen ersten Teil der Straßenabschnitte, denen eine zeitabhängige Verkehrsbeschränkung zugeordnet ist, berücksichtigt und für einen zweiten Teil der Straßenabschnitte, denen eine zeitabhängige Verkehrsbeschränkung zugeordnet ist, nicht berücksichtigt.

Bei den zeitabhängigen Verkehrsbeschränkungen handelt es sich vorzugsweise um tageszeitabhängige und/oder wochentagabhängige Verkehrsbeschränkungen. Dauerverkehrsbeschränkungen, wie beispielsweise durch Dauerbaustellen verursachte zeitabhängige Verkehrsbeschränkungen, können je nach Ausführungsvariante als zeitabhängige Verkehrsbeschränkungen im Sinne der Erfindung aufgefasst werden oder nicht.

Die Berücksichtigung von Informationen über zeitabhängige Verkehrsbeschränkungen für einen Straßenabschnitt umfasst eine Bestimmung einer erwarteten Ankunftszeit an diesem Straßenabschnitt.

Dadurch ist es überhaupt erst möglich zu entscheiden, ob eine zeitabhängige Verkehrsbeschränkung bei der Routenberechnung zu beachten ist oder nicht.

Die Berücksichtigung von Informationen über zeitabhängige Verkehrsbeschränkungen für einen Straßenabschnitt umfasst auch einen Abgleich zwischen der erwarteten Ankunftszeit an dem Straßenabschnitt und dem Zeitraum, in dem die entsprechende Verkehrsbeschränkung anwendbar ist.

Durch die Erfindung wird erreicht, dass bei einer Routenberechnung (Routensuche oder Routenbestimmung) Informationen über zeitabhängige Verkehrsbeschränkungen automatisch nur teilweise berücksichtigt werden. Dadurch ist es möglich, die Informationen über zeitabhängige Verkehrsbeschränkungen bei der Routenberechnung zu berücksichtigen, die mit besonders großer Wahrscheinlichkeit tatsächlich zu berücksichtigen sein werden. Beispielsweise ist es bei einer weit entfernten zeitabhängigen Verkehrsbeschränkung unsicher, ob diese - wenn das betroffene Fahrzeug oder Navigationssystem bei dem entsprechenden Straßenabschnitt ankommt - überhaupt anwendbar ist.

So sieht eine bevorzugte Ausführungsform der Erfindung vor, dass der erste Teil der Straßenabschnitte örtlich oder zeitlich näher an dem aktuellen Ort des Navigationssystems oder dem Startort liegt als der zweite Teil der Straßenabschnitte, insbesondere dass Straßenabschnitte des ersten Teils örtlich oder zeitlich näher an dem aktuellen Ort des Navigationssystems oder dem Startort liegen als Straßenabschnitte des zweiten Teils.

Dadurch wird erreicht, dass bei der Routenberechnung nur für die Straßenabschnitte eine zeitabhängige Verkehrsbeschränkung berücksichtigt wird, die näher an dem aktuellen Ort oder Startort für die Routenberechnung liegen als andere Straßenabschnitte.

Dadurch werden bei der Routenberechnung nur Informationen über zeitabhängige Verkehrsbeschränkungen berücksichtigt, für die mit relativ großer Zuverlässigkeit eine Aussage getroffen werden kann, ob die erwartete Ankunftszeit an dem entsprechenden Straßenabschnitt innerhalb oder außerhalb des Zeitraums liegt, in dem die Verkehrsbeschränkung anwendbar ist.

Für weit entfernte Straßenabschnitte kann eine erwartete Ankunftszeit nur mit großer Unsicherheit prognostiziert werden, da beispielsweise auf der Fahrt dorthin Pausen eingelegt werden, oder Verkehrsstörungen auftreten oder das Fahrverhalten eines Fahrers von einem erwarteten Fahrverhalten abweicht. Für diese weit entfernten Straßenabschnitte werden bei einer Routenberechnung Informationen über zeitabhängige Verkehrsbeschränkungen vorzugsweise nicht berücksichtigt.

Dadurch wird der Aufwand für eine Routenberechnung bzw. Routenneuberechnung reduziert, und somit die Dauer für eine Routenberechnung bzw. Routenneuberechnung reduziert.

Außerdem wird dadurch verhindert, dass sich die berechnete Route und damit die erwartete Ankunftszeit am Ziel von Routenneuberechnung zu Routenneuberechnung aufgrund weit entfernter zeitabhängiger Verkehrsbeschränkungen sprunghaft ändert, je nachdem, welche erwarteten Ankunftszeiten für die weit entfernten Straßenabschnitte, denen Informationen über zeitabhängige Verkehrsbeschränkungen zugeordnet sind, berechnet werden. Dies würde einen Nutzer eines Navigationssystems stark irritieren.

Es ist eine Weiterbildung, dass der zweite Teil der Straßenabschnitte örtlich oder zeitlich näher an dem Zielort liegt als der erste Teil der Straßenabschnitte.

Eine bevorzugte Ausführungsform sieht vor, dass die örtliche oder zeitliche Distanz der Straßenabschnitte des ersten Teils der Straßenabschnitte von dem aktuellen Ort des Navigationssystems oder dem Startort kleiner ist als eine vorgegebene Grenzdistanz. Beispielsweise gehören zum ersten Teil der Straßenabschnitte die Straßenabschnitte, deren Distanz zum aktuellen Ort des Navigationssystems oder dem Startort hinsichtlich Luftlinie oder Straßendistanz kleiner ist als ein vorgegebener Grenzwert, wie beispielsweise 300 km.

Alternativ oder ergänzend gehören zum ersten Teil der Straßenabschnitte die Straßenabschnitte, deren zeitliche Distanz vom aktuellen Ort des Navigationssystems oder dem Startort hinsichtlich erwarteter Reisezeit kleiner ist als ein vorgegebener Grenzwert, wie beispielsweise drei Stunden.

Dadurch fließen nur die Verkehrsbeschränkungen in die Routenberechnung ein, für die eine relativ zuverlässige Aussage darüber gemacht werden kann, ob sie zur erwarteten Ankunftszeit an dem entsprechenden Straßenabschnitt überhaupt anwendbar sind oder nicht.

Es ist eine Weiterbildung der Erfindung, dass eine Berücksichtigung von Informationen über zeitabhängige Verkehrsbeschränkungen ein Lesen dieser Informationen über zeitabhängige Verkehrsbeschränkungen aus der Speichereinrichtung umfasst.

Eine weitere bevorzugte Ausführungsvariante sieht vor, dass eine Verkehrsbeschränkung für einen Straßenabschnitt (nur) dann in die Routenberechnung einfließt, wenn der entsprechende Straßenabschnitt Element des ersten Teils der Straßenabschnitte ist (Berücksichtigung der Informationen über zeitabhängige Verkehrsbeschränkungen), und wenn zusätzlich die erwartete Ankunftszeit an dem Straßenabschnitt in dem Zeitraum liegt in dem die Verkehrsbeschränkung anwendbar ist. Andernfalls fließt eine Verkehrsbeschränkung für einen Straßenabschnitt vorzugsweise nicht in die Routenberechnung ein.

Schließlich sieht eine Weiterbildung vor, dass eine Nicht-Berücksichtigung von Informationen über zeitabhängige Verkehrsbeschränkungen für einen Straßenabschnitt bedeutet, dass die zu dem Straßenabschnitt gehörigen Informationen über zeitabhängige Verkehrsbeschränkungen gar nicht aus der Speichereinrichtung gelesen werden und/oder der Zeitraum, in dem die Verkehrsbeschränkung anwendbar ist, nicht mit einer erwarteten Ankunftszeit verglichen wird.

Dadurch kann der Aufwand für die Routenberechnung reduziert werden, und dennoch die wahrscheinlich relevanten zeitabhängigen Verkehrsbeschränkungen berücksichtigt bei einer Routenberechnung beachtet werden.

Es ist zudem eine Weiterbildung der Erfindung, dass eine Nicht-Berücksichtigung von Informationen über zeitabhängige Verkehrsbeschränkungen für einen Straßenabschnitt bedeutet, dass keine Bestimmung einer erwarteten Ankunftszeit an diesem Straßenabschnitt durchgeführt wird.

Dadurch kann der Aufwand für die Routenberechnung noch weiter reduziert werden. bei bestimmten Ereignissen durchgeführt wird, zunächst ermittelt wird, welche Straßenabschnitte (erster Teil der Straßenabschnitte) weniger als eine Grenz-Straßendistanz von dem aktuellen Ort entfernt sind.

Bei der endgültigen Routenberechnung werden dann nur die Informationen über zeitabhängige Verkehrsbeschränkungen berücksichtigt, insbesondere aus der Speichereinrichtung gelesen, die diesen Straßenabschnitten (erster Teil der Straßenabschnitte) zugeordnet sind.

Es werden bei der endgültigen Routenberechnung auch nur diese Informationen über zeitabhängige Verkehrsbeschränkungen genauer untersucht, insbesondere deren Anwendbarkeit geprüft. Dazu wird für diese Straßenabschnitte (erster Teil der Straßenabschnitte) jeweils eine erwartete Ankunftszeit an diesen Straßenabschnitten bestimmt und mit dem Zeitraum, in dem die zugehörige Verkehrsbeschränkung anwendbar ist, verglichen.

Liegt die erwartete Ankunftszeit in dem entsprechenden Anwendbarkeitszeitraum, so wird die zugehörige Verkehrsbeschränkung für diesen Straßenabschnitt bei der endgültigen Routenberechnung beachtet (d.h. die entsprechende Verkehrsbeschränkung fließt in die Routenberechnung oder Routensuche ein), andernfalls nicht.

Zur Berechnung der Ankunftszeit an einem Straßenabschnitt wird schon eine Teilroute bis zu dem Straßenabschnitt berechnet, wobei gegebenenfalls schon anwendbare zeitabhängige Verkehrsbeschränkungen berücksichtigt werden, die einem Straßenabschnitt der Teilroute zugeordnet sind.

Informationen über zeitabhängige Verkehrsbeschränkungen von Straßenabschnitten (zweiter Teil der Straßenabschnitte), die weiter als eine Grenz-Straßendistanz von dem aktuellen Ort entfernt sind, werden entweder gar nicht aus der Speichereinrichtung gelesen, und/oder zugehörige Ankunftszeiten an diesen Straßenabschnitten werden gar nicht berechnet und/oder die zugehörigen Anwendbarkeitszeiträume werden gar nicht mit zugehörigen Ankunftszeiten an diesen Straßenabschnitten verglichen.

## Patentansprüche

1. Navigationssystem,
- mit einer Speichereinrichtung, in der Informationen über Straßenabschnitte und Informationen über zeitabhängige Verkehrsbeschränkungen derart abgespeichert sind, dass Straßenabschnitten jeweils Informationen über zeitabhängige Verkehrsbeschränkungen zugeordnet sind, und
- mit einer Routen-Berechnungseinrichtung, die derart eingerichtet ist,
- dass bei der Berechnung einer Route auf die Speichereinrichtung zugegriffen wird, um basierend auf den Informationen über Straßenabschnitte und basierend auf den Informationen über zeitabhängige Verkehrsbeschränkungen eine Route zu berechnen, und
- dass bei der Berechnung der Route Informationen über zeitabhängige Verkehrsbeschränkungen für einen ersten Teil der Straßenabschnitte, denen Informationen über eine zeitabhängige Verkehrsbeschränkung zugeordnet sind, berücksichtigt werden und für einen zweiten Teil der Straßenabschnitte, denen Informationen über eine zeitabhängige Verkehrsbeschränkung zugeordnet sind, nicht berücksichtigt werden,
**dadurch gekennzeichnet,**
- **dass** die Berücksichtigung von Informationen über zeitabhängige Verkehrsbeschränkungen für einen Straßenabschnitt jeweils eine Bestimmung einer erwarteten Ankunftszeit an diesem Straßenabschnitt umfasst, und
- **dass** eine Berücksichtigung von Informationen über zeitabhängige Verkehrsbeschränkungen für einen Straßenabschnitt einen Abgleich zwischen der erwarteten Ankunftszeit an dem Straßenabschnitt und dem Zeitraum, in dem die Verkehrsbeschränkung anwendbar ist, umfasst.

2. Navigationssystem nach Anspruch 1,
bei dem der erste Teil der Straßenabschnitte örtlich oder zeitlich näher an dem aktuellen Ort des Navigationssystems oder dem Startort liegt als der zweite Teil der Straßenabschnitte.

3. Navigationssystem nach Anspruch 1 oder 2,
bei dem der zweite Teil der Straßenabschnitte örtlich oder zeitlich näher an dem Zielort liegt als der erste Teil der Straßenabschnitte.

4. Navigationssystem nach einem der vorhergehenden Ansprüche,
bei dem die örtliche oder zeitliche Distanz der Straßenabschnitte des ersten Teils der Straßenabschnitte von dem aktuellen Ort des Navigationssystems oder dem Startort kleiner ist als eine vorgegebene Grenzdistanz.

5. Navigationssystem nach einem der vorhergehenden Ansprüche,
bei dem Informationen über zeitabhängige Verkehrsbeschränkungen für einen Straßenabschnitt dann in die Routenberechnung einfließen, wenn der entsprechende Straßenabschnitt Element des ersten Teils der Straßenabschnitte ist, und wenn die erwartete Ankunftszeit an dem Straßenabschnitt in dem Zeitraum liegt in dem die Verkehrsbeschränkung anwendbar ist.

6. Navigationssystem nach einem der vorhergehenden Ansprüche,
bei dem eine Nicht-Berücksichtigung von Informationen über zeitabhängige Verkehrsbeschränkungen für einen Straßenabschnitt bedeutet, dass die zu dem Straßenabschnitt gehörigen Informationen über zeitabhängige Verkehrsbeschränkungen gar nicht aus der Speichereinrichtung gelesen werden und/oder der Zeitraum, in dem die Verkehrsbeschränkung anwendbar ist, nicht mit einer erwarteten Ankunftszeit verglichen wird.

7. Navigationssystem nach einem der vorhergehenden Ansprüche,
bei dem eine Nicht-Berücksichtigung von Informationen über zeitabhängige Verkehrsbeschränkungen für einen Straßenabschnitt bedeutet, dass keine Bestimmung einer erwarteten Ankunftszeit an diesem Straßenabschnitt durchgeführt wird.

## Claims

1. A navigation system,
- comprising a memory device, in which information concerning road portions and information concerning time-dependent traffic restrictions is stored in such a way that road portions are each assigned information concerning time-dependent traffic restrictions, and
- comprising a route calculation device, which is designed in such a way
- that, when calculating a route, the memory device is accessed in order to calculate a route on the basis of the information concerning road portions and on the basis of the information concerning time-dependent traffic restrictions, and
- that, when calculating the route, information concerning time-dependent traffic restrictions is taken into consideration for a first part of the road portions to which information concerning a time-dependent traffic restriction is assigned and is not taken into consideration for a second part of the road portions to which information concerning a time-dependent traffic restriction is assigned,
**characterised in that**
- the consideration of information concerning time-dependent traffic restrictions for a road portion in each case comprises a determination of an expected arrival time atthis road portion, and **in that**
- a consideration of information concerning time-dependent traffic restrictions for a road portion comprises a comparison between the expected arrival time at the road portion and the period of time within which the traffic restriction is applicable.

2. A navigation system according to claim 1,
wherein, with respect to location ortime, the first part of the road portions is situated closer to the current location of the navigation system or the starting location than the second part of the road portions.

3. A navigation system according to claim 1 or 2,
wherein, with respect to location ortime, the second part of the road portions is situated closerto the target location than the first part of the road portions.

4. A navigation system according to any one of the preceding claims,
wherein the location-related or time-related distance of the road portions of the first part of the road portions from the current location of the navigation system or the starting location is smallerthan a predefined limit distance.

5. A navigation system according to any one of the preceding claims,
wherein information concerning time-dependent traffic restrictions for a road portion is included in the route calculation when the corresponding road portion is an element of the first part of the road portions, and when the expected arrival time at the road portion lies within the period of time within which the traffic restriction is applicable.

6. A navigation system according to any one of the preceding claims,
wherein, when information concerning time-dependent traffic restrictions is not taken into consideration for a road portion, this means that the information concerning time-dependent traffic restrictions pertaining to said road portion cannot be read out at all from the memory device and/or the period of time within which the traffic restriction is applicable is not compared with an expected arrival time.

7. A navigation system according to any one of the preceding claims,
wherein, when information concerning time-dependent traffic restrictions is not taken into consideration for a road portion, this means that no determination of an expected arrival time atthis road portion is performed.

## Revendications

1. Système de navigation comprenant :
- un dispositif de mémoire dans lequel sont enregistrées des informations concernant des segments de chaussée et des informations concernant des restrictions de circulation dépendant du temps de sorte que soit respectivement associées à des segments de chaussée des informations concernant des restrictions de circulation dépendant du temps, et
- un dispositif de calcul d'itinéraire réalisé de sorte que :
- lors du calcul d'un itinéraire on accède au dispositif de mémoire, pour permettre de calculer un itinéraire sur le fondement des informations concernant des segments de chaussée et sur le fondement des informations concernant des restrictions de circulation dépendant du temps, et
- lors du calcul de l'itinéraire, on prend en considération des informations concernant des restrictions de circulation dépendant du temps pour une première partie des segments de chaussée dont les informations sont associées à une restriction de circulation dépendant du temps, et on ne les prend pas en considération pour une seconde partie des segments de chaussée dont les informations sont associées à une restriction de circulation dépendant du temps,
**caractérisé en ce que**
- la prise en considération d'informations concernant des restrictions de circulation dépendant du temps pour un segment de chaussée comprend respectivement une détermination du moment d'entrée attendu sur ce segment de chaussée, et
- une prise en considération d'informations concernant des restrictions de circulation dépendant du temps pour un segment de chaussée comprend une comparaison entre le moment d'arrivée attendue sur le segment de chaussée et la période dans laquelle la restriction de circulation est utilisable.

2. Système de navigation conforme à la revendication 1, dans lequel la première partie des segments de chaussée est plus proche dans l'espace ou dans le temps de l'emplacement actuel du système de navigation ou du lieu de départ que la seconde partie des segments de chaussée.

3. Système de navigation conforme à la revendication lou 2, dans lequel la seconde partie des segments de chaussée est plus proche dans l'espace ou dans le temps du lieu de destination que la première partie des segments de chaussée.

4. Système de navigation conforme à l'une des revendications précédentes dans lequel la distance dans l'espace ou dans le temps des segments de chaussée de la première partie des segments de chaussée du lieu actuel du système de navigation ou du point de départ est inférieure à une distance limite prédéfinie.

5. Système de navigation conforme à l'une des revendications précédentes, dans lequel des informations concernant des restrictions de circulation dépendant du temps pour un segment de chaussée ont une influence sur le calcul des itinéraires lorsque le segment de chaussée correspondant est un élément de la première partie des segments de chaussée et que le moment d'arrivée attendu sur le segment de chaussée est situé dans laps de temps dans lequel la restriction de circulation est utilisable.

6. Système de navigation conforme à l'une des revendications précédentes, dans lequel une non prise en considération d'informations concernant des restrictions de circulation dépendant du temps pour un segment de chaussée signifie que les informations concernant des restrictions de circulation dépendant du temps afférentes à ce segment de chaussée n'ont pas été lues dans le dispositif de mémoire, et/ou que laps de temps pendant lequel la restriction de circulation est utilisable n'a pas été comparé à un moment d'arrivée attendu.

7. Système de navigation conforme à l'une des revendications précédentes dans lequel une non prise en considération d'informations concernant des restrictions de circulation dépendant du temps pour un segment de chaussée signifie qu'aucune détermination d'un moment d'arrivée attendu sur se segment de chaussée n'a été effectuée
